# EUROPÄISCHE PATENTSCHRIFT

(11) **EP 2 906 401 B1**
(45) Veröffentlichungstag und Bekanntmachung des Hinweises auf die Patenterteilung: **08.02.2017**
(21) Anmeldenummer: 13795403.8
(22) Anmeldetag: 09.10.2013
(51) Int. Cl.: B29B 7/60, B01F 15/04, B65B 1/04, B65B 1/32

(54) **EINRICHTUNG ZUR DOSIERUNG VON KUNSTSTOFF-GRANULAT**
DEVICE FOR METERING PLASTICS GRANULATE
DISPOSITIF DE DOSAGE DES GRANULÉS DE MATIÈRE PLASTIQUE

(30) Priorität: 11.10.2012 AT 11052012
(43) Veröffentlichungstag der Anmeldung: 19.08.2015
(73) Patentinhaber: Wittmann Kunststoffgeräte GmbH, 1220 Wien (AT)
(72) Erfinder: FUX, Erhardt, A-1223 Wien (AT); MILLER, Robbie J., Ontario L9P 1H8 (CA); CORTURILLO, Joseph, Ontario L6B 1B9 (CA)
(74) Vertreter: Graschitz, Roland
(86) Internationale Anmeldenummer: PCT/AT2013/000167
(87) Internationale Veröffentlichungsnummer: WO 2014/056010

(56) Entgegenhaltungen:
- EP-A1- 2 045 003
- WO-A1-2011/006906
- DE-A1- 19 528 636
- FR-A1- 2 356 129
- FR-A1- 2 840 404
- JP-A- S53 123 461
- US-A- 3 822 866

## Beschreibung

Die Erfindung betrifft eine Einrichtung zur Dosierung von Kunststoff-Granulat, für Kunststoff-Granulat verarbeitende Maschinen, insbesondere für Spritzgussmaschinen, wobei mindestens ein, mit Schüttgut befüllbarer, Materialtrichter mit einem Materialventil vorgesehen ist und gegebenenfalls unter dem Materialventil ein mit einer Waage verbundener Wiegebehälter angeordnet ist, wobei für die Waage und die Materialventile eine Steuerung vorgesehen ist.

Entsprechend der US 3 822 866 A ist eine Einrichtung zur Dosierung von Kunststoff-Granulat für Kunststoff-Granulat verarbeitende Maschinen bekannt. Diese Einrichtung weist ein Auslaufventil für das Material, das aus dem Wiegebehälter fließt, auf. Das heißt, dieses Auslaufventil ist Teil des Wiegebehälters, der Teil der Wiegezelle ist. Dieses Auslaufventil dient ausschließlich zur Entleerung des Wiegebehälters. In der US 3 822 866 A wird auch ein Verfahren zur Bereitstellung von Schüttgut vor der Dosierung beschrieben. Es wird das Kunststoff-Granulat durch die Fördereinrichtung vor der Dosierung in Behältern bereitgestellt.

Aus der DE 195 28 636 A1 ist eine Einrichtung zum Fördern und Dosieren von Schüttgut bekannt, bei dem das Dosiergerät gleichzeitig als Fördergerät dient.

Weiters ist aus der US 2008/049546 A1 eine Fördereinrichtung bekannt, die mehrere Behälter aufweist.

Darüber hinaus ist aus der DE 696 27 717 T2 ein Verfahren und ein gravimetrischer Mischer zum Abgeben von abgemessenen Mengen von granularen Materialien und Farbmitteln, insbesondere Pigmente in flüssiger Form, bekannt.

Weiters ist aus der DE 05 075 472 T1 ein gravimetrischer Mischer und Fülltrichter mit integrierten Abgabeventil für körniges Material bekannt.

Ferner ist aus der DE 697 32 659 T2 ein gravimetrischer Mischer bekannt, der einen Rahmen, einen abnehmbaren Materialvorratstrichter mit einem Ventil, einen Wiegebehälter mit Gewichtserfassung und eine Mischkammer unter dem Wiegebehälter umfasst.

Wie eingangs schon aufgezeigt, werden verschiedene Mengen von verschiedenen Kunststoff-Granulaten nach frei einstellbaren Rezepten in Batches abgefüllt und jede einzelne Art eines Kunststoff-Granulates, wie beispielsweise Neuware, Masterbatch, Additive und/oder Mahlgut, wird aus einem Materialtrichter über ein Materialventil nacheinander oder auch parallel in einen Wiegebehälter oder Mischbehälter, je nach System, abgelassen.

In vorwiegenden Fällen findet eine Rezeptur Verwendung, die die einzelnen Arten der Kunststoff-Granulate, wie beispielsweise Neuware, Mahlgut, Masterbatch, und/oder Additive beinhaltet. Dabei stehen Neuware und Mahlgut in einem gewichtsmäßigen Missverhältnis zu Masterbatch und Additiv. So können die Anteile von Neuware und Mahlgut etwa 70% und 30% betragen und Masterbatch bzw. Additiv 1 bis 2% bezogen auf die Neuware betragen. Für jede Art der Kunststoff-Granulate ist ein eigener Behälter vorgesehen.

Um die obigen Vorgaben erfüllen zu können, sind Materialventile am unteren Ende der Materialtrichter notwendig.

Aufgabe der Erfindung ist es daher eine Einrichtung der eingangs genannten Art zu schaffen, mit der einerseits ein hoher Materialdurchsatz und anderseits auch eine Kleinmengendosierung möglich sind.

Die Aufgabe wird durch die beigefügten Patentansprüche gelöst.

Die erfindungsgemäße Einrichtung ist dadurch gekennzeichnet, dass das Materialventil als Klappen-Dosierventil ausgebildet ist, wobei das Klappen-Dosierventil aus einem über eine horizontale Achse beweglichen Teil, einem Verschluss, und einem feststehenden Teil, einem Abstreifer, besteht, dass der bewegliche Teil einen Betätigungsarm für einen Aktuator und an dem, dem feststehenden Teil zugewandten, Ende eine Verschlussplatte mit einer Abstreifernase aufweist und dass die Abstreifernase, im geschlossenen Zustand des Dosierventils, den Abstreifer berührt. Mit der erfindungsgemäßen Einrichtung ist es erstmals möglich eine genaueste Kleinmengendosierung mit einer gepulsten Betätigung des Klappen-Dosierventils zu erreichen und bei einer andauernden bzw. permanenten Betätigung des Klappen-Dosierventils einen hohen Materialdurchsatz zu erreichen. Die daraus resultierenden Vorteile sind durch die genaueste Kleinmengendosierung eine außerordentlich hohe Qualität und durch den hohen Materialdurchsatz eine große Zeitersparnis beim Verfahrensschritt der Dosierung. Ein weiterer Vorteil ist darin zu sehen, dass der konstruktive Aufbau äußerst einfach und praktisch wartungsfrei ist. Ferner ermöglicht diese Konstruktion einen blitzartigen Schließeffekt des Ventils.

Das Klappen-Dosierventil zeichnet sich auch für seine kleinen Abmessungen am Dosiergerät aus. Die Aktuatoreinheit, die zum Öffnen und Schließen des Klappen-Dosierventils dient, ist als Pneumatikzylinder ausgeführt und ist nahezu vertikal und platzsparend am Gerät montiert. Aufgrund dieser Anordnung wird die Handhabung wesentlich vereinfacht und erfordert bei der Abnahme auch kein lästiges Abstecken von Druckluft oder Kabeln.

Ein weiterer Vorteil dieser erfindungsgemäßen Einrichtung ist eben im Klappen-Dosierventil zu sehen. Derartig schnell arbeitende, abnutzungsbeständige Ventile aus Edelstahl erlauben auch eine effiziente Dosierung von Materialien mit hohem Glasfaseranteil. Hauptmaterialien und Additive werden zielgenau auf das gewünschte Maß dosiert.

Nach einem besonderen Merkmal der Erfindung überlappt die Abstreifernase, im geschlossenen Zustand des Klappen-Dosierventils, den Abstreifer. Die Abstreifernase überlappt sich beim Schließen des Klappen-Dosierventils mit dem Abstreifer und verhindert ein Nachlaufen des Materials und erzielt dadurch eine präzise Materialdosierung. Es unterbindet weiters das Einquetschen von einzelnen oder mehreren Materialkörnern und verhindert das unkontrollierte Materialauslaufen, das für eine exakte Dosierung notwendig ist.

Gemäß einem weiteren besonderen Merkmal der Erfindung ist der bewegliche Teil, der Verschluss, für einen automatischen Verschluss des Klappen-Dosierventils mit einer Feder beaufschlagt. Ein automatischer Verschluss des Klappen-Dosierventils vereinfacht die Abnahme und Handhabung der befüllten Trichter und verhindert dadurch das Materialauslaufen bei der Abnahme. Nach einer vorteilhaften Ausgestaltung der Erfindung ist die Abstreifernase als Abkantung oder als abgerundete Lippe ausgebildet. Durch die dadurch erreichbare quasi breitere Schließfläche ist ein optimaler Schließeffekt gegeben.

Gemäß einer weiteren Ausgestaltung der Erfindung ist der Abstreifer aus einem flexiblen Material, vorzugsweise Federstahl, gebildet. Wird beim Schließen ein oder mehrere Körner eingequetscht, prellt der Federabstreifer von den Körnern ab und löst das Einquetschen bzw. das Offenhalten der Klappe von selbst.

Nach einer besonderen Weiterbildung der Erfindung ist die Verschlussplatte aus einem flexiblen Material, vorzugsweise Federstahl, hergestellt. Durch die Ausführung der Verschlussplatte mit Federstahl wird der gleiche Effekt wie beim Federabstreifer erreicht.

Gemäß einem weiteren besonderen Merkmal der Erfindung ist der Aktuator zur Betätigung des Betätigungsarmes ein Pneumatikzylinder. Vorteilhafterweise funktionieren derartige Pneumatikzylinder störungsfrei und wartungsfrei.

Nach einer Weiterbildung der Erfindung ist der Aktuator nahezu vertikal am Gehäuse der Einrichtung angeordnet. Dadurch ist der Aktuator platzsparend am Gerät montiert, so dass kleinstmögliche Abmessungen des Gerätes daraus resultieren. Eine der prioritären Vorgaben des Kunden ist immer eine minimalste Bauweise der Einrichtung, also eine kleine Standfläche der Einrichtung, mit einem höchstmöglichen Durchsatz der Einrichtung im Betrieb. Die kleine Standfläche wird deshalb gefordert, da die Einrichtung gegebenenfalls auf der Maschine, vorzugsweise der Spritzgussmaschine als schlanker Körper angeordnet werden soll.

Gemäß einem weiteren besonderen Merkmal der Erfindung ist zur Betätigung des Klappen-Dosierventils eine Steuerung mit einer Rechnereinheit vorgesehen, der mindestens ein Messwert zuführbar ist und die Rechnereinheit das Klappen-Dosierventil entsprechend ansteuert.

Nach einer Weiterbildung des vorangegangenen Merkmals der Erfindung umfasst die Steuerung eine Rechnereinheit mit einem Mikroprozessor, der der Messwert der Waage zugeführt ist und die Rechnereinheit, in der die Dosierungsmenge gespeichert ist, steuert entsprechend dieser Dosierungsmenge das Klappen-Dosierventil an. Durch einen proprietären adaptiven Regelalgorithmus wird mit der Steuerung eine präzise Dosierung erreicht. Natürlich ist bei dieser Steuerung eine einfachste Bedienung Grundvoraussetzung und somit wird eine hohe Leistungsfähigkeit erreicht. Darüber hinaus gewährleistet die RTLS-Technologie (Real Time Live Scale-Technologie) eine zweistufige progressiv genauer werdende Dosierung für ein exaktes Zielgewicht. Es braucht nicht erwähnt zu werden, dass diese Steuerung Netzwerksfähigkeit zu Zentralrechnern, Laptops und dgl. aufweist. Die Steuereinheit selbst besteht aus elektrischen Standard-Komponenten, die einen zuverlässigen Betrieb und eine einfache Wartung garantieren.

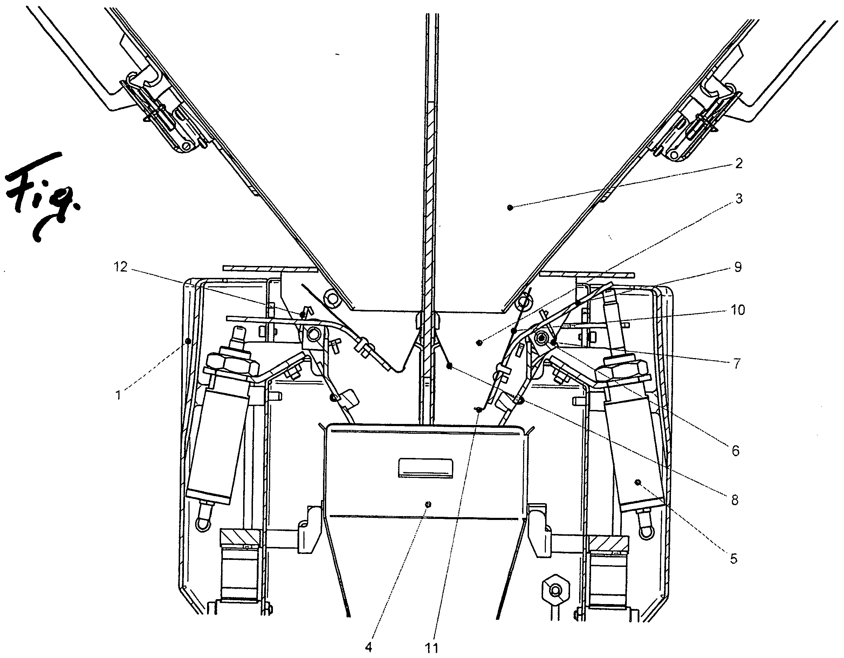

Die Erfindung wird an Hand eines in der Zeichnung dargestellten Ausführungsbeispieles näher erläutert.

Die Figur zeigt einen Schnitt durch die Einrichtung.

Die Einrichtung zur Dosierung von KunststoffGranulat, für Kunststoff-Granulat verarbeitende Maschinen, insbesondere für Spritzgussmaschinen, ist modular aufgebaut und besteht aus einem Gehäuse 1 in dem die nachstehend noch näher beschriebenen Einbauten angeordnet sind und aus abnehmbaren oder fix montierten Materialtrichtern 2. Für jede Art eines Kunststoff-Granulates ist ein Materialtrichter 2 mit einem Dosierventil 3 vorgesehen. Natürlich könnte auch parallel oder sequentiell dosiert werden, wobei dann das Kunststoff-Granulat in mehreren Trichtern bereitgestellt wird. Die Materialtrichter 2 sind einerseits über abnehmbare Materialtrichterabdeckungen verschließbar und weisen anderseits, im abgedeckten Zustand, einen Montageflansch für die Zuführung des Kunststoff-Granulats auf. Zur leichteren Handhabung kann jeder Materialtrichter 2 zwei Griffe aufweisen. Zur bequemeren Reinigung und auch zur Sichtkontrolle kann jeder Materialtrichter 2 ein abnehmbares Sichtfenster aufweisen. Ferner kann der Materialtrichter 2 aus abnutzungsbeständigem Edelstahl bestehen und Schnellverschlüsse zur raschen Abnahme der Materialtrichter 2 vom Gehäuse 1 besitzen.

Unter dem Dosierventil 3 ist ein mit einer Waage verbundener Wiegebehälter 4 angeordnet. Als Waage kann eine Plattenformwägezelle vorgesehen sein. Über eine - nicht dargestellte - Steuerung ist die Waage mit dem Dosierventil 3 verbunden. Natürlich liegt es auch im Rahmen der Erfindung mit dem durch den Aktuator 5 betätigten Dosierventil 3 ein so genanntes "loss in weight"-System auszustatten, bei dem die Vorratsmenge im Trichter, also die Verlustmenge, jedesmal gewogen wird.

Das Dosierventil 3 ist als selbstschließendes Dosierventil 3 ausgebildet, wobei die Öffnung des Dosierventils 3 über einen, vorzugsweise am Gehäuse 1 angeordneten, Aktuator 5, einem Pneumatikzylinder, erfolgt.

In der oben aufgezeigten Dosiereinrichtung werden verschiedene Mengen von verschiedenen Kunststoff-Granulaten nach frei einstellbaren Rezepten in Batches abgefüllt. Jede einzelne Art eines Kunststoff-Granulates, wie beispielsweise Neuware, Masterbatch, Additive und/oder Mahlgut, wird aus einem Materialtrichter 2 über das Dosierventil 3 nacheinander in den Wiegebehälter 4 abgelassen, im Wiegebehälter 4 gewogen und die Rezeptmenge anschließend in einem Mischer vermischt.

Wie bereits erwähnt, stehen meist Neuware und Mahlgut in einem gewichtsmäßigen Missverhältnis zu Masterbatch und Additiv. So können die Anteile von Neuware und Mahlgut etwa 70% und 30% betragen und Masterbatch bzw. Additiv 1 bis 2% bezogen auf die Neuware betragen. Aufgrund dieser Tatsache sind Dosierventile 3 notwendig, die einerseits ein hoher Materialdurchsatz und anderseits auch eine Kleinmengendosierung ermöglichen.

Das Dosierventil 3 ist als Klappen-Dosierventil ausgebildet, wobei das Dosierventil 3 aus einem über eine horizontale Achse 6 beweglichen Teil, einem Verschluss 7, und einem feststehenden Teil, einem Abstreifer 8, besteht. Der bewegliche Teil, also der Verschluss 7, weist einen Betätigungsarm 9 für den Aktuator 5 und an dem, dem feststehenden Teil, dem Abstreifer 8, zugewandten, Ende eine Verschlussplatte 10 mit einer Abstreifernase 11 auf. Die Abstreifernase 11 berührt im geschlossenen Zustand des Dosierventils 3 den Abstreifer 8. In bevorzugten Ausführungen kann die Abstreifernase 11 im geschlossenen Zustand des Dosierventils den Abstreifer 8 überlappen. Die Abstreifernase 11 kann als Abkantung oder als abgerundete Lippe ausgebildet sein.

Der Abstreifer 8 und gegebenenfalls auch die Verschlussplatte 10 sind aus einem flexiblen Material, vorzugsweise Federstahl, gebildet bzw. hergestellt. Natürlich könnte auch Edelstahl verwendet werden.

Für einen automatischen Verschluss des Dosierventils 3 ist der Verschluss 7 mit einer Feder 12 beaufschlagt.

Wie schon erwähnt, ist die Waage mit den Dosierventilen 3 über eine Steuerung oder Regelung verbunden. Die Steuerung umfasst eine Rechnereinheit, insbesondere einen Mikroprozessor, der der Messwert der Waage zugeführt wird. In der Rechnereinheit ist die Rezeptur gespeichert, wobei die Steuerung die Dosierventile 3 entsprechend ansteuert und die Menge der einzelnen Arten der Kunststoff-Granulate abfüllt.

Wie bereits aufgezeigt ist der gravierende Vorteil dieser Einrichtung, dass exakteste Dosierungen möglich sind, wodurch die Qualität immens erhöht wird. In Ergänzung zu der in Rede stehenden Einrichtung wird durch den Regelalgorithmus mit der Steuerung eine weitere Präzisierung der Dosierung erreicht. Darüber hinaus gewährleistet die RTLS-Technologie (Real Time Live Scale-Technologie) eine zweistufige progressiv genauer werdende Dosierung für ein exaktes Zielgewicht.

## Patentansprüche

1. Einrichtung zur Dosierung von Kunststoff-Granulat, für Kunststoff-Granulat verarbeitende Maschinen, insbesondere für Spritzgussmaschinen, wobei mindestens ein, mit Schüttgut befüllbarer, Materialtrichter mit einem Materialventil vorgesehen ist und gegebenenfalls unter dem Materialventil ein mit einer Waage verbundener Wiegebehälter angeordnet ist, wobei für die Waage und die Materialventile eine Steuerung vorgesehen ist, **dadurch gekennzeichnet, dass** das Materialventil als Klappen-Dosierventil (3) ausgebildet ist, wobei das Klappen-Dosierventil (3) aus einem über eine horizontale Achse (6) beweglichen Teil, einem Verschluss (7), und einem feststehenden Teil, einem Abstreifer (8), besteht, dass der bewegliche Teil einen Betätigungsarm (9) für einen Aktuator (5) und an dem, dem feststehenden Teil zugewandten, Ende eine Verschlussplatte (10) mit einer Abstreifernase (11) aufweist und dass die Abstreifernase (11), im geschlossenen Zustand des Dosierventils (3), den Abstreifer (8) berührt.

2. Einrichtung nach Anspruch 1, **dadurch gekennzeichnet, dass** die Abstreifernase (11), im geschlossenen Zustand des Klappen-Dosierventils (3), den Abstreifer (8) überlappt.

3. Einrichtung nach Anspruch 1 oder 2, **dadurch gekennzeichnet, dass** der bewegliche Teil, der Verschluss (7), für einen automatischen Verschluss des Klappen-Dosierventils (3) mit einer Feder (12) beaufschlagt ist.

4. Einrichtung nach einem oder mehreren der Ansprüche 1 bis 3, **dadurch gekennzeichnet, dass** die Abstreifernase (11) als Abkantung oder als abgerundete Lippe ausgebildet ist.

5. Einrichtung nach einem oder mehreren der Ansprüche 1 bis 4, **dadurch gekennzeichnet, dass** der Abstreifer (8) aus einem flexiblen Material, vorzugsweise Federstahl, gebildet ist.

6. Einrichtung nach einem oder mehreren der Ansprüche 1 bis 5, **dadurch gekennzeichnet, dass** die Verschlussplatte (10) aus einem flexiblen Material, vorzugsweise Federstahl, hergestellt ist.

7. Einrichtung nach einem oder mehreren der Ansprüche 1 bis 6, **dadurch gekennzeichnet, dass** der Aktuator (5) zur Betätigung des Betätigungsarmes (9) ein Pneumatikzylinder ist.

8. Einrichtung nach einem oder mehreren der Ansprüche 1 bis 7, **dadurch gekennzeichnet, dass** der Aktuator (5) nahezu vertikal am Gehäuse (1) der Einrichtung angeordnet ist.

9. Einrichtung nach Anspruch 1 bis 8, **dadurch gekennzeichnet, dass** zur Betätigung des Klappen-Dosierventils (3) eine Steuerung mit einer Rechnereinheit vorgesehen ist, der mindestens ein Messwert zuführbar ist und die Rechnereinheit das Klappen-Dosierventil (3) entsprechend ansteuert.

10. Einrichtung nach Anspruch 9, **dadurch gekennzeichnet, dass** die Steuerung eine Rechnereinheit mit einem Mikroprozessor umfasst, der der Messwert der Waage zugeführt ist und die Rechnereinheit, in der die Dosierungsmenge gespeichert ist, entsprechend dieser Dosierungsmenge das Klappen-Dosierventil (3) ansteuert.

## Claims

1. Device for metering plastics granulate, for machines processing plastics granulate, in particular for injection molding machines, wherein at least one material funnel into which bulk material can be filled and which has a material valve is provided and a weighing container connected to weighing scales is optionally arranged below the material valve, wherein a control unit is provided for the weighing scales and material valve, **characterized in that** the material valve is designed as a flap-type metering valve (3), wherein said flap-type metering valve (3) consists of a part, a closure (7), movable via a horizontal axis (6) and a fixed part, a scraper (8), that the movable part has an operating arm (9) for an actuator (5) and at the end facing towards the fixed part has a closure plate (10) having a scraper projection (11) and that in the closed state of the metering valve (3) the scraper projection (11) touches the scraper (8).

2. Device in accordance with claim 1, **characterized in that** in the closed state of the flap-type metering valve (3) the scraper projection (11) overlaps the scraper (8).

3. Device in accordance with claim 1 or 2, **characterized in that** a spring (12) is applied to the movable part, the closure (7), for automatic closure of the flap-type metering valve (3).

4. Device in accordance with one or more of claims 1 to 3, **characterized in that** the scraper projection (11) is designed as bended edge or as rounded lip.

5. Device in accordance with one or more of claims 1 to 4, **characterized in that** the scraper (8) is made of a flexible material, preferably spring steel.

6. Device in accordance with one or more of claims 1 to 5, **characterized in that** the closure plate (10) is produced from a flexible material, preferably spring steel.

7. Device in accordance with one or more of claims 1 to 6, **characterized in that** the actuator (5) for operating the operating arm (9) is a pneumatic cylinder.

8. Device in accordance with one or more of claims 1 to 7, **characterized in that** the actuator (5) is arranged nearly vertically on the housing (1) of the device.

9. Device in accordance with claim 1 to 8, **characterized in that** to operate the flap-type metering valve (3), a control unit with a computer unit is provided, which can be supplied with at least one measured value, and the computer unit controls the flap-type metering valve (3) accordingly.

10. Device in accordance with claim 9, **characterized in that** the control unit comprises a computer unit with a microprocessor, which is supplied with the measured value of the weighing scales and the computer unit, in which the metering quantity is stored, controls the flap-type metering valve (3) according to said metering quantity.

## Revendications

1. Dispositif de dosage de granulat en plastique destiné à des machines traitant du granulat en plastique, dont notamment des machines de moulage par injection équipées d'une trémie métallique avec vanne produits, laquelle trémie peut être remplie de matériau. Le cas échéant, il y a sous la vanne produits un récipient de pesage relié a une balance avec une commande tant pour la balance que pour les vannes produit. Ce dispositif est **caractérisé par le fait que** les vannes produit sont des vannes de dosage à clapet (3), ce dernier (3) étant composé d'un axe horizontal (6) avec une partie amovible, une fermeture (7), et une partie fixe, un racleur (8), ainsi que **par le fait que** la partie amovible possède un bras d'actionnement (9) d'un actuateur (5). Le bout d'une plaque de fermeture (10) qui est orientée sur la partie fixe est doté d'un nez de raclage (11) qui entre en contact avec le racleur (8) lorsque la vanne de dosage est fermée.

2. Dispositif selon la revendication 1, **caractérisé par le fait que** le nez de raclage (11) dépasse du racleur (8) lorsque la vanne de dosage à clapet (8) est fermée.

3. Dispositif selon la revendication 1 ou 2 **caractérisé par le fait que** la partie amovible (7) est équipée d'un ressort (12) permettant la fermeture automatique de la vanne de dosage à clapet (3).

4. Dispositif selon au moins une des revendications 1 à 3, **caractérisé par le fait que** le nez de raclage (11) a la forme d'un rebord ou d'une lèvre arrondie.

5. Dispositif selon au moins une des revendications 1 à 4, **caractérisé par le fait que** le racleur (8) est en un matériau flexible, de préférence en acier à ressort.

6. Dispositif selon au moins une des revendications 1 à 5, **caractérisé par le fait que** la plaque de fermeture (10) est en un matériau flexible, de préférence en acier à ressort.

7. Dispositif selon au moins une des revendications 1 à 6, **caractérisé par le fait que** l'actuateur (5) permettant l'actionnement du bras (9) est un cylindre pneumatique.

8. Dispositif selon au moins une des revendications 1 à 7, **caractérisé par le fait que** l'actuateur (5) est disposé de façon verticale sur le boîtier (1) du dispositif.

9. Dispositif selon au moins une des revendications 1 à 8, **caractérisé par le fait qu'**une commande avec ordinateur est prévue, qui permet d'actionner la vanne de dosage à clapet (3) lequel ordinateur peut recevoir au moins une valeur de mesure, et peut adresser la vanne de dosage à clapet (3).

10. Dispositif selon la revendication 9, **caractérisé par le fait que** la commande comprend un ordinateur avec un microprocesseur transmettant la valeur de mesure de la balance et adressant l'ordinateur dans lequel la quantité de dosage est enregistrée, ainsi que la vanne de dosage à clapet (3) en fonction de cette quantité de dosage.
